# EUROPEAN PATENT APPLICATION

(11) **EP 4 837 781 A1**
(43) Date of publication of application: **11.11.2026**
(21) Application number: 26172107.0
(22) Date of filing: 14.04.2026
(51) Int. Cl.: B60N 2/75, B60K 35/10, B60K 35/60

(54) **ARMREST ASSEMBLY WITH MOVEABLE COVER**

(30) Priority: 08.05.2025 GB 202507003
(71) Applicant: AGCO International GmbH, 8212 Neuhausen am Rheinfall (CH)
(72) Inventor: BARZEN, Alexander, 87616 Marktoberdorf (DE); WEIGAND, Jan, 87616 Marktoberdorf (DE)
(74) Representative: AGCO Intellectual Property Department

(57) **Abstract**

An armrest assembly (104) for an agricultural machine (102) is equipped with an armrest (300), a first input device (308) with at least one input element for controlling a function of the agricultural machine (102), a cover (304) moveable between a closed position for avoiding manual access to the first input device (308) and an open position for providing manual access to the first input device (308), a display (306) and a control unit (302). The control unit (302) is configured to determine the position of the cover (304) and to control the display (306) to show different contents in dependence of the position of the cover (304).

## Description

### FIELD

The present disclosure relates generally to an armrest assembly.

### BACKGROUND

Armrests are used in vehicles or machines such as agricultural machines to enhance operator comfort and efficiency during long hours of operation. They provide support for the operator's arms, reducing fatigue and improving ergonomics. Armrests may be part of an operator's seat. While operating the machine, the operator may rest his arm on the armrest for a comfortable and relaxed operation of input elements for controlling the machine.

EP 3 663 128 A1, "Working Vehicle", filed on December 02, 2019, discloses an armrest assembly for controlling an agricultural machine with a rotatable elbow rest portion. In a closed position of the elbow rest portion, several input elements such as rotary dials and push buttons switches are covered by the elbow rest portion. When the elbow rest portion is rotated in an open position, the input elements get uncovered and may be used by the operator.

### BRIEF SUMMARY

It would be beneficial to provide an armrest assembly providing an improved ease of use. According to an aspect of the invention there is provided an armrest assembly for an agricultural machine with an armrest, a first input device with at least one input element for controlling a function of the agricultural machine, a cover moveable between a closed position for avoiding manual access to the first input device and an open position for providing manual access to the first input device, a display, and a control unit. The control unit is configured to determine the position of the cover, and to control the display to show different contents in dependence of the position of the cover.

The agricultural machine may be an agricultural vehicle such as a tractor, a harvester, a combine, a sprayer, etc., optionally connected with an implement such as a rake, a plough, a baler, a trailer, etc. The agricultural machine may comprise a seat on which an operator may sit for operating manually the agricultural machine. While sitting on the seat, the operator may rest his arm or hand on the armrest assembly for a more comfortable and relaxing body posture. The first input device may be any type of a human machine interface that may be used for controlling any function of the agricultural machine. For example, the operator may activate or deactivate any component of the agricultural machine such as switching on/off vehicle lights, or adjust a parameter of any component such as raising or lowering a front or rear hitch, etc. The cover may be manually moveable. In the closed position, the first input device may be covered by the cover. Hence, the input device may not be operated unintentionally when the operator rests his arm on the armrest assembly. But if the operator intends to execute the function of the agricultural machine, the operator may move the cover to the open position to uncover the first input device. Depending on the position of the cover, the control unit may adjust the content of the display. For example, the display may show information related to the first input device such as a function assigned if the cover is in the open position but may hide this information if the cover is in the closed position. Hence, the display may show only information necessary for operation of the armrest assembly with the cover in the corresponding cover position. The operator may not be confused by information regarding functions which is not available or executable due to a closed cover.

The armrest assembly may comprise a second input device being manually accessible in the closed position of the cover.

I. e., the second input device may not be covered by the cover when the cover is in the closed position. The second input device may be a joystick for instance to control a function of the agricultural machine that should be permanently available independently from the position of the cover, such as a driving function of the agricultural machine (acceleration or steering for example).

The armrest assembly may comprise a bracket connecting the first input device with the second input device. The bracket may be manually accessible in the closed position of the cover.

The cover may reach up to the first input device in the closed position. But the operator may grasp with his hand or fingers below the closed cover to get in contact with the first input device through the bracket. Hence, an operation of the first input device may be possible with the cover in the closed position, e. g. for reason of an emergency control if the cover is defectively stuck in the closed position.

The display may be arranged between the first input device and the second input device.

Hence, the display may be arranged at a location which is visible for the operator independently from the position of the cover, so also in the closed position of the cover.

The display may be arranged at the second input device.

Since the cover may cover the first input device in the closed position only but not the second input device, the second input device is an appropriate location to arrange the display so that the content of the display can be seen by the operator even if the cover is in the closed position. The display may be arranged to any part of the second input device, for example to a housing or a surface of the second input device. Alternatively, the display may be arranged at the bracket. Hence, the display may show relevant content assigned to the first and/or the second input device that may be permanently visible independently from the position of the cover.

The control unit may be configured to control the display to show a first content related to the function assigned to the at least one input element of the first input device if the cover is in the open position.

The content may be represented by a graphical user interface (GUI). Depending on the accessibility of the first input device, the display may show different content. If the cover is open and the first input device is accessible, the control unit may control the display to show important information in regard to the at least one operable input element of the first input device. Such information may comprise a representation, e. g. a pictogram, of the function assigned to the at least one input element, a setting value of the function executable by the at least one input element and/or a locking status of the at least one input element.

The control unit may be configured to control the display to dismiss the first content if the cover is in the closed position.

In the closed position of the cover, the at least one input element of the first input device may not be intended to be used by the operator. Accordingly, the first content related to the at least one input element may not be required by the operator. To avoid that the operator may get confused by the first content, the control unit may switch off the display or show a different content. The different content may include an indication that the at least one input element of the first input device is covered by the cover. So, the operator may understand from this indication that he needs to open the cover if he wants to execute the function assigned to the at least one input element.

The control unit may be configured to control the display to show a second content unrelated to the function assigned to the at least one input element of the first input device if the cover is in the closed position.

For example, the control unit may control the display to show a driving speed of the agricultural machine, a compass or time and date information. However, the second content may be different to the first content. Optionally, the first content may be unrelated to all input elements of the first input device.

The second content may be related to a function of the second input device.

I. e., the control unit may control the display to show content related to the second input device that is still accessible in the closed position of the cover (in contrast to the first input device being not operable because of the closed cover). For example, the second content may comprise function(s) assigned to the second input device, setting value(s) of the function(s), locking status, etc.

The armrest assembly may comprise a position detector for detecting the position of the cover. The control unit may be configured to receive the position of the cover from the position detector.

Depending on the received position from the position detector, the control unit may distinguish whether the cover is in the open or closed position. The control unit may optionally detect any intermediate position of the cover between the fully closed and fully open position. Based thereon, the control unit may control the display to show content in dependence of any intermediate position of the cover. For example, in an intermediate position of the cover, one input element of the first input device may be covered but a second input element of the first input device may be uncovered. Hence, the control unit may control the display to show content related to uncovered input elements of the first input device whereas content related to covered input element of the first input device may be dismissed.

The control unit may be configured to detect a movement of the cover from the closed position to the open position, and disable an execution of a function assigned to the at least one input element of the first input device in response to a manual operation of the at least one input element while or after the cover has been moved from the open position to the closed position.

Next to the open and closed positions, the control unit may also detect a movement of the cover based on changing positions (over time) received from the position detector. The execution of the function of the at least one input element may be disabled to avoid an unintentional operation of the input element of the first input device, e. g. during closing the cover. The function may be disabled unless the at least one input element has been unlocked.

The armrest assembly may comprise a switch for enabling the execution of the function assigned to the at least one input element in response to a manual operation of the at least one input element. Manual access to the switch may be avoided in the closed position of the cover.

The separate enablement of the execution of the function assigned to the at least one input element may prevent an unintentional operation of the at least one input element, e. g. during opening the cover. An unintentional unlocking of the disabled function may also be avoided. The switch may be part of the first input device, e. g. in terms of a corresponding input element.

A movement of the cover may be lockable. The control unit may be configured to check an authorization of a request to unlock the movement of the cover, and unlock the movement of the cover if the authorization is valid.

Hence, the control unit may control accessibility of the at least one input element of the first input device in dependence of an operator's authorization. Thus, opening or closing of the cover may be prevented for unauthorized operators by the control unit. Authorization may be checked by a finger print sensor to identify the operator. But alternative solutions to check the authorization may be implemented. The control unit may control a locking mechanism to lock or unlock the cover in dependence of a valid authorization.

The at least one input element may be a rocker or a wheel.

A rocker or a wheel may be used for a very comfortable adjustment of a parameter of any component of the agricultural machine such as raising or lowering a front or rear hitch, etc. The value of the adjustment may correspond to a value of rotation of the rocker or the wheel. Alternatively, the at least one input element may be a switch for easily activating or deactivating any component of the agricultural machine such as switching on/off vehicle lights. Optionally, the first input device may comprise a combination of two or more input elements each of a different type.

The cover may be slideably moveable between the closed position and the open position along a longitudinal direction of the armrest assembly.

The sliding movability may provide an easy adjustment of the cover. For example, the operator may move the cover with his elbow or forearm resting on the cover while his hand simultaneously grasps the second input device. Hence, the operator may move the cover without releasing or removing his hand from the second input device.

Another aspect includes a method of controlling an armrest assembly with a display and a cover moveable between a closed position for avoiding manual access to a first input device and an open position for providing manual access to the first input device. The method comprises determining a position of the cover, and controlling the display to show different contents in dependence of the position of the cover.

As disclosed above, the control unit is configured to execute different actions. Each action may be implemented as one or more method steps of the method executable by the control unit. Hence, each action for which the control unit is configured to execute may be defined as a method step.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Several aspects of the invention will now be described, by way of example only, with reference to the accompanying drawings, in which:
FIG. 1 illustrates an agricultural machine with an armrest assembly.
FIG. 2 illustrates a simplified view of a control unit.
FIG. 3A illustrates the armrest assembly.
FIG. 3B illustrates the armrest assembly.
FIG. 4A illustrates a first graphical user interface (GUI).
FIG. 4B illustrates a second graphical user interface (GUI).
FIG. 4C illustrates the first graphical user interface (GUI) with changed settings.
FIG. 5 illustrates a flow chart of a method executable by the control unit of FIG. 2.

### DETAILED DESCRIPTION

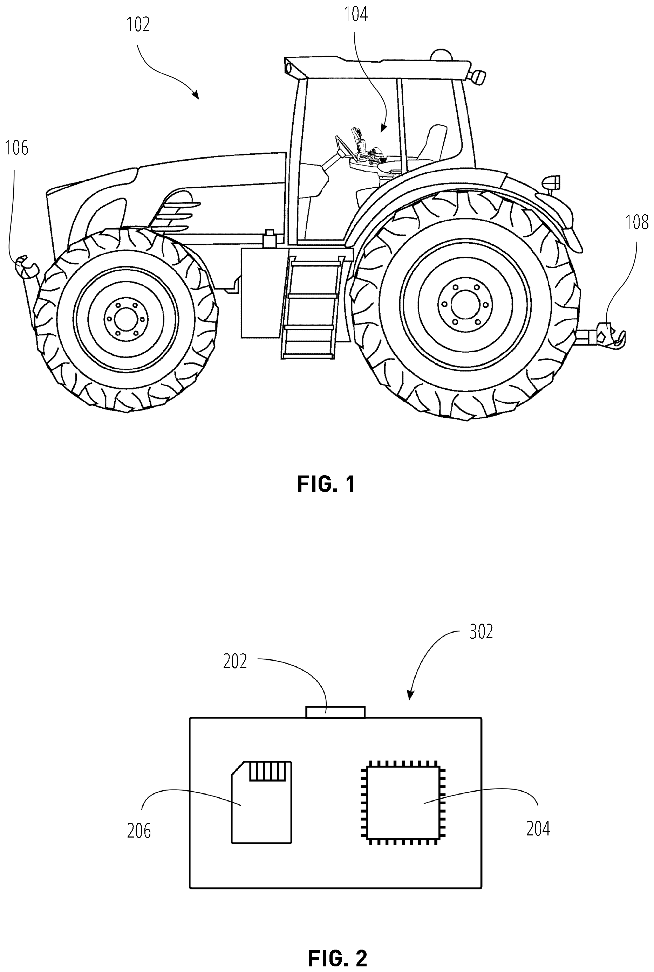

An agricultural machine may be a vehicle or a vehicle-implement combination. The vehicle may be an agricultural vehicle such as a tractor, a harvester, a combine, a sprayer or of any other type such as a truck. In FIG. 1, an agricultural machine 102 is exemplarily illustrated as a tractor. The tractor may generate a tractive force to tow or pull an implement through an agricultural field. The implement may be fixed to the tractor or detachably connected with the tractor by means of a front hitch 106 or a rear hitch 108. The implement may be used for an operation in the agricultural field and may be of the type of a plough, a rake, a planter, a sprayer, a mower, a trailer, etc. Depending on the type of the implement, the implement may comprise one or more tools such as a rake rotor, a mower knife, a seeding unit, a spray nozzle, a shovel, a dumper, etc.

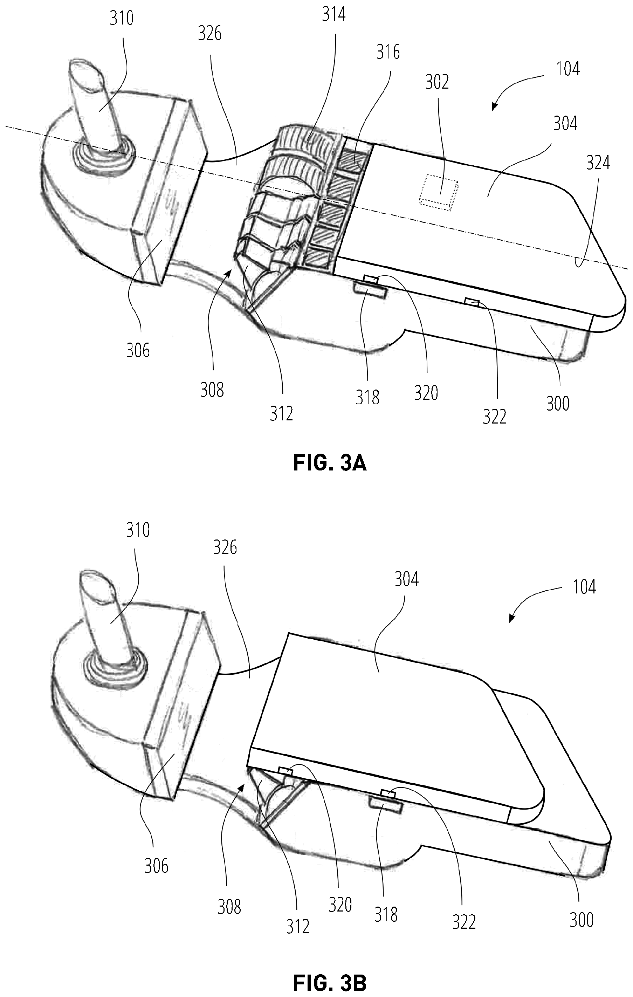

The agricultural machine 102 shown in FIG. 1 comprises an armrest assembly 104 as shown in FIG. 3A and FIG. 3B in more detail. The armrest assembly 104 is integrated in a cabin of the agricultural machine 102, for example next to a driver's seat. The armrest assembly 104 may be operated by an operator of the agricultural machine 102 to control any function of the agricultural machine 102. For example, the operator may adjust a speed or a driving direction of the agricultural machine 102, switch on/off any components of the agricultural machine 102 such as vehicle lights or adjust a parameter of any component of the agricultural machine 102 such as raising or lowering a height of the front hitch 106 or the rear hitch 108.

FIG. 2 shows a control unit 302 comprising an I/O interface 202, a controller 204 and a memory 206. The I/O interface 202, the controller 204 and the memory 206 may be attached to a printed circuit board (PCB). The control unit 302 may receive and send signals or data via the I/O interface 202. The I/O interface 202 may be a wireless interface or a connector. The controller 204 may optionally represent a combination of two or more networked controllers. The controller 204 may store the data or signals received by the control unit 302 in the memory 206. The memory 206 may contain additional data or executable computer program products, for example in terms of a computer-implemented method, that may be retrieved, processed or executed by the controller 204. Data or signals resulting from the processing of data or signals or from the execution of a computer program product may be stored to the memory 206 or sent to the I/O interface 202 by the controller 204. Regardless of FIG. 2 exemplarily illustrating the control unit 302 as a standalone control unit, the control unit 302 may represent a network of multiple control units distributed within the system.

FIG. 3A shows the armrest assembly 104 comprising an armrest 300, a control unit 302 integrated into the armrest 300, a cover 304, a display 306, a first input device 308, a second input device 310, a bracket 326 connecting the second input device 310 with the armrest 300, a position detector 318, an indicator 320, and an indicator 322. The first input device 308 comprises several input elements of different type, namely three rockers 312, two wheels 314 and five switches 316. To each of the rockers 312 and wheels 314, one of the switches 316 is arranged.

The input elements of the first input device 308 are assigned to different functions of the agricultural machine 102. The control unit 302 detects an operation of an input element by the operator and executes the function assigned to the input element. The assignment is stored in the memory 206 of the control unit 302. The assignment may be changed by the operator to reassign a different function to any input element. For example, an operator may rotate a wheel 314 or deflect a rocker 312 to adjust a parameter of any component of the agricultural machine 102 such as raising or lowering the height of the front hitch 106 or the rear hitch 108. The operator may also press a switch 316 to activate or deactivate a component of the agricultural machine 102 such as switching on/off a vehicle light. Alternatively, one or more of the switches 316 may be assigned to a rocker 312 or a wheel 314 to toggle the operability of the corresponding wheel 314 or rocker 312. For example, the operator may press one of the switches 316 to enable or disable the functionality of the corresponding rocker 312 or wheel 314 assigned to the operated switch 316. When a wheel 314 or rocker 312 is disabled, the operator may operate the wheel 314 or the rocker 312. But the function of the disabled rocker 312 or disabled wheel 314 will not be executed by the control unit 302.

The second input device 310 may be used by the operator to control the movement of the agricultural machine 102. As shown in FIG. 3A, the second input device 310 is exemplarily designed as a joystick for adjusting the driving speed and the steering direction of the agricultural machine 102. The control unit 302 detects an operation of the second input device 310 and controls the agricultural machine 102 accordingly.

The bracket 326 mechanically connects the second input device 310 with the armrest 300 of the armrest assembly 104. The bracket 326 extends from a lower part of the second input device 310 to a lower part of the armrest 300 below the first input device 308. Due to the bracket 326, the second input device 310 is arranged with some distance from the first input device 308 providing free space between the first and second input devices 308 and 310 as can be seen in FIG. 3A. The display 306 is arranged within the free space and attached to a wall of the second input device 310 extending from the bracket 326 in a vertical direction. Hence, the display 306 faces the first input device 308 so that an operator sitting next to the armrest assembly 104 and having his arm rested on the armrest 300 has a free visibility to the display 306.

The cover 304 is movably mounted on the armrest 300 for sliding the cover 304 along a longitudinal direction 324 of the armrest assembly 104 between an open position as shown in FIG. 3A and a closed position as shown in FIG. 3B. The operator may slide the cover 304 manually, for example by his arm or elbow resting on the cover 304. While resting his arm on the cover 304, the operator may manually operate the second input device 310. In the (fully) open position (see FIG. 3A), the first input device 308 is freely accessible and each input element of the first input device 308 may be operated by the operator. In the (fully) closed position (see FIG. 3B), all input elements of the first input device 308 are covered by the cover 304 so that a free access for operating the input elements is prevented. The movement of the cover 304 is limited such that the cover reaches up to the first input device 308. But the cover 304 is not moveable beyond that limit for providing a free accessibility to the free space between the first and second input device 308 and 310 when the cover 304 is fully closed.

In the closed position, an unintentional operation of any one of the input elements of the first input device 308, e. g. by the arm of the operator while operating the second input devices 310, can be avoided. The arm may get in contact with the cover 304 only but not with a rocker 312, a wheel 314 or a switch 316. For reasons of emergency, the operator may move his hand to the free space between the first and the second input device 308 and 310, and grasp his fingers below the cover 304 to get in contact with the input elements of the first input device 308, e. g. a rocker 312 or a wheel 314. Optionally, the movement of the cover 304 may be locked by a locking mechanism. The locking mechanism may be unlocked after an authorization check of the operator has been passed. For example, the control unit 302 may prompt the operator to hold his finger on a finger print sensor of the armrest assembly 104. The control unit 302 may receive the information from the finger print sensor and check the authorization of the operator. If the operator could be verified, the control unit 302 controls the locking mechanism to unlock movability of the cover 304. Otherwise, the movability remains locked.

The indicators 320 and 322 are integrated in the cover 304. For example, the indicators 320 and 322 are magnets. As can be seen in FIG. 3A and FIG. 3B, depending on the position of the cover 304, the position detector 318 detects the indicator 320 or 322, and sends a corresponding signal to the control unit 302. If indicator 320 is close to the position detector 318, the control unit 302 can detect that the cover 304 is in the open position. Analogously, if indicator 322 is close to the position detector 318, the control unit 302 can detect that the cover 304 is in the closed position. For example, the position detector 318 may comprise a Hall sensor to detect a movement of the indicators 320 and 322. Based thereon, the control unit 302 may additionally determine when the cover 304 starts moving and a movement direction of the cover 304. The control unit 302 may also determine any intermediate position of the cover 304 between the fully open and fully closed position. For example, the control unit 302 may detect a position of the cover 304 covering the switches 316 only but still providing free accessibility to the rockers 312 and wheels 314.

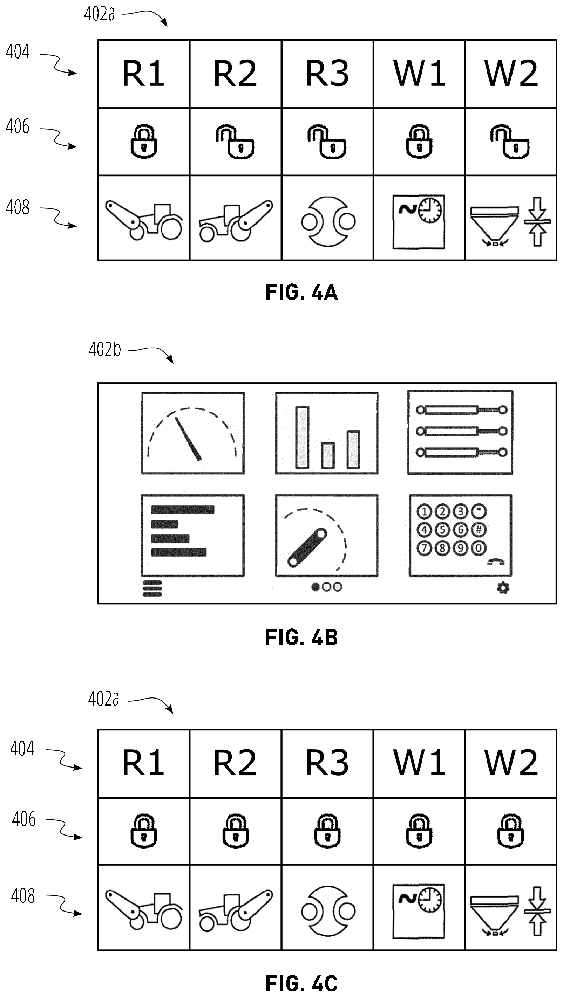

Based on the position of the cover 304, the control unit 302 controls the display 306 to show a cover position dependent content of the display 306. The content is displayed in terms of changeable graphical user interfaces (GUIs) 402a, 402b as exemplarily shown in FIG. 4A to 4C. A method for controlling the armrest assembly 104 with the display 306 and the cover 304 moveable between the closed position for avoiding manual access to the first input device 308 and the open position for providing manual access to the first input device 308 may be executed by the control unit 302 to control the display 306 accordingly.

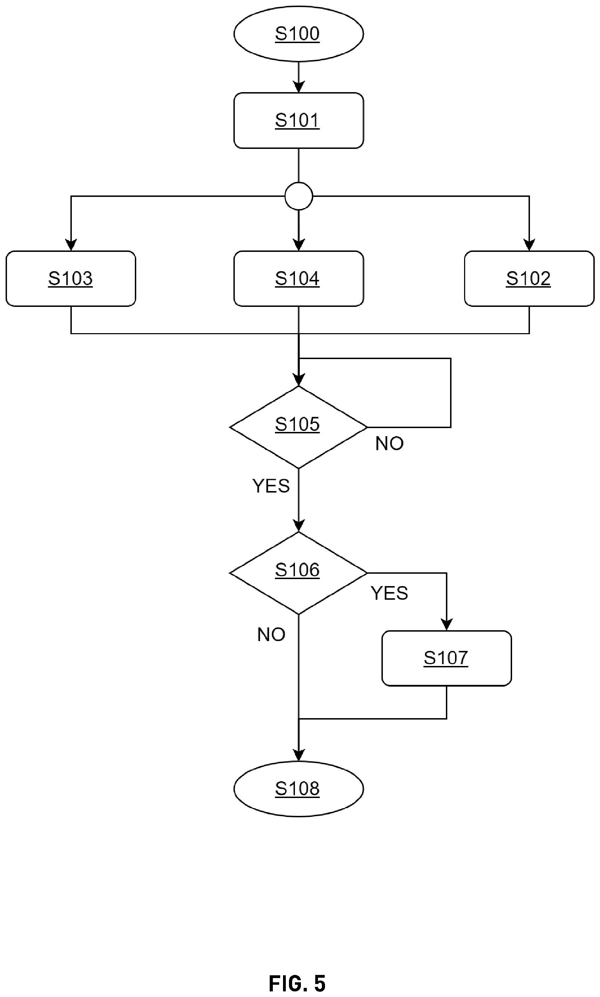

The method is illustrated in FIG. 5 in terms of a flow chart. The method may be at least partly a computer-implemented method stored as a computer program product in the memory 206 of the control unit 302. The control unit 302 is configured to carry out the method. Computer-implemented parts of the method may be executed by the controller 204 of the control unit 302. Non-computer-implemented parts of the method may be executed manually or by other components of the system. The method is described by way of example of several steps without any restriction in respect of the steps. That is, the number or the order of steps may be adapted, for example single steps may be excluded and/or added and executed earlier or later than described. When the method proceeds from one step to a next step, the previous step may still be active so that both the one and the next step may be executed in parallel. Accordingly, the control unit may execute two or more method steps in parallel.

The method starts at step S100 and proceeds to step S101. At step S101, the control unit 302 receives the position of the cover 304 from the position detector 318. Based thereof, the control unit 302 determines the position of the cover 304 as for example the open position or the closed position. Optionally, the control unit 302 may determine any intermediate position of the cover 304 between the open and the closed position. It is assumed now, that the cover 304 is in the open position as shown in FIG. 3A. Hence, the control unit 302 determines that the cover 304 is in the open position in response to the indicator 320 detected by the position detector 318.

Depending on whether the open position, the closed position or optionally the intermediate position has been detected, the method proceeds to step S102 in case of the open position, to step S103 in case of the closed position or to step S104 in case of an intermediate position.

At step S102, the control unit 302 controls the display 306 to show a first content in terms of the GUI 402a as exemplarily shown in FIG. 4A. According to this GUI 402a, a matrix having three rows 404, 406 and 408, and five columns is displayed by the display 306. The first row 404 is used for labelling the columns with R1, R2, R3, W1 and W2 wherein R1 refers to the first rocker, R2 to the second rocker, R3 to the third rocker, W1 to the first wheel and W2 the second wheel of the first input device 308. Accordingly, the rockers 312 and wheels 314 can be distinguished as rocker R1, rocker R2, rocker R3, wheel W1 and wheel W2.

The second row 406 shows open or closed padlock symbols to indicate which of the rockers 312 and wheels 314 are enabled or disabled. As can be seen, the closed padlock below R1 indicates that the corresponding rocker R1 is disabled whereas the open padlock below R2 indicates that the corresponding rocker R2 is enabled. Same logic applies to the padlocks below R3, W1 and W2. The operator may switch between the enabled and disabled status of a rocker or a wheel by pressing the corresponding switch 316 of the first input device 308 that is assigned to the rocker or the wheel. In this case, the control unit 302 controls the display 306 to update the second row 406 accordingly.

Further, the third row 408 shows pictograms which represent the function that is assigned to the corresponding rocker or wheel. As exemplarily shown in FIG. 4A, a function to adjust the height of the front hitch 106 of the agricultural machine 102 is assigned to the rocker R1 and a function to adjust the height of the rear hitch 108 of the agricultural machine 102 is assigned to rocker R2. Other functions are assigned to rocker R3, wheel W1 and wheel W2. Thus, the control unit controls the display 306 to show a content related to the function assigned to the at least one input element of the first input device 308 if the cover 304 is in the open position. Hence, the operator can see on the display 306 which function is assigned to which rocker 312 or wheel 314 and control the agricultural machine 102 accordingly.

At step S103, the control unit 302 controls the display 306 to show a second content being different to the first content in terms of the second GUI 402b as exemplarily shown in FIG. 4B. The control unit 302 controls the display 306 to dismiss fully or at least in part the first content (as exemplarily shown by GUI 402a) if the cover 304 is in the closed position. According to GUI 402b, different data and apps are displayed by the display 306 such as a tachometer showing the driving speed of the agricultural machine 102, diagrams showing interesting parameters of the agricultural machine 102, apps for adjusting any settings of the agricultural machine 102 as for instance set values for hydraulic cylinders and an app for telephone calls. The second content illustrated by the second GUI 402b may be updated in response to an operation of an input device different to the first input device 308 covered by the cover 304. For example, the speed value illustrated by the tachometer is adjusted in accordance with a speed increase or decrease in response to an operation of the second input device 310. Hence, the control unit 302 is configured to control the display 306 to show a second content unrelated to the function assigned to the at least one input element of the first input device 308 if the cover 304 is in the closed position.

At step S104, the control unit 302 controls the display 306 to show a third content. The principle how the display 306 is controlled by the control unit 302 is similar to step S102 and S103. The control unit 302 may show the content of the first GUI 402a, the second GUI 402b, a combination of the first and the second GUIs 402a, 402b or any other content.

Hence, the control unit 302 controls the display 306 to show different contents in dependence of the position of the cover 304. After steps S102, S103 or S104, the method proceeds to step S105 and the control unit 302 checks an authorization of a request to unlock the movement of the cover 304. For example the control unit 302 receives a request to unlock a movement of the cover 304 from the fingerprint sensor when the operator touches it. The fingerprint is received from the control unit 302 and compared with fingerprints for which an authorization to open the cover 304 is stored in the memory 206 of the control unit 302. If the received fingerprint matches with an authorized fingerprint, authorization of the operator's request is considered to be valid. Then, the control unit 302 unlocks the locking mechanism to enable the movement of the cover 304 and the method proceeds to step S106. If not, the control unit 302 keeps the locking mechanism locked to prevent a movement of the cover 304. Then, the method steps back to step S105 again.

At step S106, the control unit 302 checks whether the cover 304 is moved from the closed position to the open position. The position detector 318 detects whether indicator 320 or indicator 322 is moved backwards or forwards and sends a corresponding signal to the control unit 302. Based thereon, the control unit 302 can determine a movement of the cover 304 in any direction, including a movement of the cover 304 from the closed position to the open position. Optionally, the control unit 302 may determine when the cover 304 starts moving from the closed position to the open position and when the open position has been reached.

If the cover 304 is moved from the closed position to the open position, the method proceeds to step S107 and the control unit 302 disables any execution of a function assigned to the input elements of the first input device 308. Hence, a manual operation of any input element of the first input device 308 will not be executed by the control unit 302 while or after the cover 304 has been moved from the open to the closed position. Accordingly, an unintentional operation of the first input device 308 during opening of the cover 304 can be avoided, for example if the arm of the operator hits the first input device 308 while the operator moves the cover 304 with his elbow. Further, the control unit 302 controls the display 306 to update the content as exemplarily shown by GUI 402b in FIG. 4C. As can be seen there, a closed padlock is assigned to each rocker R1 to R3 and wheel W1 to W2 in the second row 406 to indicate that all rockers 312 and wheels 314 are disabled.

If the cover 304 has been moved to the open position (see FIG. 3A), the control unit 302 allows to enable the rockers 312 and wheels 314 again. Then, the operator may press the switch 316 assigned to the rocker 312 or wheel 314 he intends to enable. For example, the operator presses the switch assigned to rocker R2, the switch assigned to rocker R3 and the switch assigned to wheel W2. In response thereon, the control unit 302 enables the execution of the function of the rockers R2 and R3 as well as the wheel W2 and executes the corresponding function if the operator operates the corresponding input elements. In addition, the control unit 302 controls the display 306 to update its content as shown by the GUI 402a in FIG. 4A. As can be seen there, unlocked padlocks are assigned to the rockers R2 and R3 and to the wheel W2 in the second row 406 to indicate that rockers R2 and R3 and wheel W2 are enabled instead of rocker R1 and wheel W1 which remain disabled. Then, the method proceeds to step S108.

If the control unit 302 cannot detect at step S106 that the cover 304 is moved from the closed position to the open position, the method proceeds directly to step S108.

At step S108, the method ends. The method may be restarted again by the control unit 302 at any time by executing step S100. The execution of the method may be repeated until the operation of the agricultural machine 102 has been stopped.

All references cited herein are incorporated herein in their entireties. If there is a conflict between definitions herein and in an incorporated reference, the definition herein shall control.

### LISTING OF DRAWING ELEMENTS

| | | | |
|---|---|---|---|
| 102 | agricultural machine | 310 | input device |
| 104 | armrest assembly | 312 | rocker |
| 106 | front hitch | 314 | wheel |
| 108 | rear hitch | 316 | switch |
| 202 | I/O interface | 318 | position detector |
| 204 | controller | 320 | indicator |
| 206 | memory | 322 | indicator |
| 300 | armrest | 324 | longitudinal direction |
| 302 | control unit | 326 | bracket |
| 304 | cover | 402a | GUI |
| 306 | display | 402b | GUI |
| 308 | input device | 404 | row |
| 406 | row | | |
| 408 | row | | |

## Claims

1. An armrest assembly (104) for an agricultural machine (102) comprising:
an armrest (300);
a first input device (308) with at least one input element for controlling a function of the agricultural machine (102);
a cover (304) moveable between a closed position for avoiding manual access to the first input device (308) and an open position for providing manual access to the first input device (308);
a display (306); and
a control unit (302); wherein
the control unit (302) is configured to
determine the position of the cover (304);
control the display (306) to show different contents in dependence of the position of the cover (304).

2. The armrest assembly (104) of claim 1, comprising
a second input device (310) being manually accessible in the closed position of the cover (304).

3. The armrest assembly (104) of claim 2, comprising
a bracket (326) connecting the first input device (308) with the second input device (310); wherein the bracket (326) is manually accessible in the closed position of the cover (304).

4. The armrest assembly (104) of claim 2 or 3, wherein
the display (306) is arranged between the first input device (308) and the second input device (310).

5. The armrest assembly (104) of any one of claims 2 to 4, wherein
the display (306) is arranged at the second input device (310).

6. The armrest assembly (104) of any one of the preceding claims, wherein
the control unit (302) is configured to control the display (306) to show a first content related to the function assigned to the at least one input element of the first input device (308) if the cover (304) is in the open position.

7. The armrest assembly (104) of claim 6, wherein
the control unit (302) is configured to control the display (306) to dismiss the first content if the cover (304) is in the closed position.

8. The armrest assembly (104) of any one of the preceding claims, wherein
the control unit (302) is configured to control the display (306) to show a second content unrelated to the function assigned to the at least one input element of the first input device (308) if the cover (304) is in the closed position.

9. The armrest assembly (104) of claim 8, when referring back to claim 2, wherein
the second content is related to a function of the second input device (310).

10. The armrest assembly (104) of any one of the preceding claims, comprising a position detector (318) for detecting the position of the cover (304); wherein
the control unit (302) is configured to receive the position of the cover (304) from the position detector (318).

11. The armrest assembly (104) of any one of the preceding claims, wherein the control unit (302) is configured to
detect a movement of the cover (304) from the closed position to the open position; and
disable an execution of a function assigned to the at least one input element in response to a manual operation of the at least one input element while or after the cover (304) has been moved from the open position to the closed position.

12. The armrest assembly (104) of claim 11, comprising
a switch (316) for enabling the execution of the function assigned to the at least one input element in response to a manual operation of the at least one input element; wherein manual access to the switch (316) is avoided in the closed position of the cover (304).

13. The armrest assembly (104) of claim 12, wherein
a movement of the cover (304) is lockable; and
the control unit (302) is configured to
check an authorization of a request to unlock the movement of the cover (304); and
unlock the movement of the cover (304) if the authorization is valid.

14. The armrest assembly (104) of any one of the preceding claims, wherein
the at least one input element is a rocker (312) or a wheel (314).

15. The armrest assembly (104) of any one of the preceding claims, wherein
the cover (304) is slideably moveable between the closed position and the open position along a longitudinal direction (324) of the armrest assembly (104).

16. A method of controlling an armrest assembly (104) with a display (306) and a cover (304) moveable between a closed position for avoiding manual access to a first input device (308) and an open position for providing manual access to the first input device (308), the method comprising:
determining a position of the cover (304);
controlling the display (306) to show different contents in dependence of the position of the cover (304).
